# EUROPÄISCHE PATENTANMELDUNG

(11) **EP 3 422 268 A1**
(43) Veröffentlichungstag der Anmeldung: **02.01.2019**
(21) Anmeldenummer: 18000555.5
(22) Anmeldetag: 25.06.2018
(51) Int. Cl.: G06Q 10/08

(54) **VERFAHREN ZUR DISPOSITION EINGEHENDER UND AUSGEHENDER WAREN**

(30) Priorität: 26.06.2017 DE 102017005991
(71) Anmelder: Trans Service Team GmbH, 67550 Worms (DE)
(72) Erfinder: Schmidt, Frank, 67550 Worms (DE)
(74) Vertreter: Hörschler, Wolfram Johannes

(57) **Zusammenfassung**

Die Erfindung bezieht sich auf ein Verfahren zur Disposition eingehender und ausgehender Ware (1 - 9), in einem Ladebereich (10), der in mehrere Unterlagerbereiche (20 - 29) unterteilt ist, innerhalb derer Hochregale (35) aufgestellt sind, die voneinander durch Regalgassen (40) für Flurförderzeuge (50) getrennt sind, mit nachfolgenden Verfahrensschritten:
a) eingehende Waren (1 - 9) werden beim Wareneingang (11, 12) gescannt, wodurch ein Warenmanagementsystem (100) der eingehenden Ware (1 - 9) einen Lagerplatz (75) zuweist,
b) die eingegangene Ware (1 - 9) wird mit einem Barcode (101) versehen,
c) die eingehende Ware (1 - 9) wird dem Warenmanagementsystem (100) zugewiesenen Lagerplatz (75) eingelagert,
d) unabhängig und entkoppelt vom Wareneingang (11, 12) werden ausgehende Waren (1 - 9) in einem Kommissionierbereich (30) zusammengestellt und
e) die ausgehenden Waren (1 - 9) werden in jeweils einem Tor (32) zugeordneten Warenausgangsbahnen (31) verladefertig aufgestellt.

## Beschreibung

### Technisches Gebiet

Die vorliegende Erfindung bezieht sich auf ein Verfahren zur Disposition ein- und ausgehender Waren in einem Lagerbereich, der wareneingangsseitig und warenausgangsseitig durch ein Warenmanagementsystem gesteuert ist.

### Stand der Technik

Bei Logistikunternehmen, beispielsweise Speditionen oder Zustelldiensten erfolgt das Warenmanagementsystem eingangsseitig und ausgangsseitig durch das Zusammenspiel eines übergeordneten Managementsystems und einzelnen Personen, die beispielsweise wareneingangsseitig Stammdaten erfassen und warenausgangsseitig, unterstützt durch das Warenmanagementsystem, den Lagerbereich verlassende Kommissionen zusammenstellen. Bei Logistikunternehmen, die von großen Firmen für die Zwischenlagerung von Endprodukten tätig sind, kann es sich bei den im Lagerbereich eingelagerten Stoffen, vornehmlich um Feststoffe, Flüssigkeiten handein, von denen der größte Teil der Gefahrstoffverordnung unterliegt und als umweltgefährlich kennzeichnungspflichtig ist. Je nach Klassifikation kann in allen Lagerbereichen die Lagerung von Stoffen mit Warengefährdungsklassen (WGK) 1, 2 und 3 erfolgen, wobei die Lagerklassen die LGK 8b für nichtbrennbar ätzende Stoffe, die LGK 9a umweltgefährliche Stoffe und LGK 9b umweltgefährliche Stoffe in Verbindung mit Gefahrenhinweisen R 51/53 umfassen.

In bestimmten Lagerabschnitten können Stoffe der Lagerklassen LGK 3 entzündbare flüssige Stoffe, LGK 6.1a brennbare akut giftige Stoffe, LGK 6.1b nichtbrennbare akut giftige Stoffe, LGK 6.1c brennbare giftige oder chronisch wirkende Stoffe sowie LGK 6.1d nichtbrennbare giftige oder chronisch wirkende Stoffe eingelagert werden. Wird eine bestimmte Regelung, die durch die Norm TRGS 510 vorgegeben, hinsichtlich einer Zusammenlagerung von Stoffen eingehalten, dann dürfen auch Stoffe der folgenden Lagerklassen eingelagert werden, nämlich der LGK 10 brennbare Flüssigkeiten, soweit nicht LGK3, LGK 11 brennbare Feststoffe, LGK 12 nichtbrennbare Feststoffe sowie Stoffe der LGK 13, bei denen es sich um sonstige brennbare und nichtbrennbare Stoffe handelt.

Aufgrund der Vielzahl der Lagerklassen bzw. der einzulagernden Stoffe mit Warengefahrenklassen ergibt sich ein aufwendiges Handling hinsichtlich der Trennung der Stoffe und hinsichtlich nach Kommissionierung von Waren in einer Charge, d.h. beispielsweise einer LKW-Ladung oder einer Containerladung, bei der eingehende Waren wie ausgehende Waren eine sehr hohe Varianz aufweisen können, d.h. ein aufwendiges Warenmanagement zur Verteilung der eingehenden Waren bei Ankunft, zur Zwischenlagerung entsprechend der Lagerklassen bzw. der Warengefahrklasse der einzulagernden Stoffe und hinsichtlich der Kommissionierung von ausgehenden Waren vorliegt.

### Darstellung der Erfindung

Der Erfindung liegt die Aufgabe zugrunde, ein Verfahren zur Disposition eingehender und ausgehender Waren anzugeben, welches innerhalb der Lagerbereiche kurze Wege ermöglicht, darüber hinaus hochflexibel ist und ferner hocheffektiv ist, derart, dass Leerfahrten von Flurförderzeugen oder von Staplern, wie beispielsweise Hochregalstaplern, auf ein unvermeidbares Minimum reduziert sind. Darüber hinaus liegt der vorliegenden Erfindung die Aufgabe zugrunde, einen Selbstorganisationsprozess der Logistik innerhalb der Lagerbereiche bzw. der Unterlagerbereiche zu schaffen, bei dem durch das Abscannen von Barcodes Wege und Kosten optimiert werden und bei möglichst nur einmaligem Anfassen der ein- bzw. ausgehenden Waren Fahraufträge für Fördergeräte generiert werden.

Die Aufgabe wird durch das erfindungsgemäße Verfahren zur Disposition ein- und ausgehender Waren gelöst, bei dem in einem Lagerbereich, der in mehrere Unterlagerbereiche unterteilt ist, innerhalb derer Hochregale aufgestellt sind, die voneinander durch Regalgassen für Flurförderzeuge und/oder Stapler getrennt sind, nachfolgende Verfahrensschritte sequentiell durchlaufen werden:
a) eingehende Ware wird beim Wareneingang gescannt, wodurch ein Warenmanagementsystem der eingehenden Ware einen Lagerplatz zuweist,
b) die eingegangene Ware wird mit mindestens einem vom Warenmanagementsystem generierten Barcode versehen,
c) die eingehende Ware wird auf den zugewiesenen Lagerplatz eingelagert,
d) unabhängig und entkoppelt vom Wareneingang werden ausgehende Waren in einem Kommissionierungsbereich zusammengestellt und
e) die ausgehenden Waren werden in jeweils in einem Tor zugeordneten Warenausgangsbahnen aufgestellt.

Im vorliegenden Zusammenhang wird unter dem Begriff "Scannen" das Lesen einer maschinenlesbaren ID verstanden, die an der Ware angebracht oder dieser zugeordnet ist. Das Lesen erfolgt mittels eines Lesegerätes / Scanner.

Das Warenmanagementsystem kann in diesem Zusammenhang beim Wareneingang mit unterschiedlich vorgebbaren Kriterien arbeiten und die Lageplätze für eingehende Waren generieren.

Als Kriterien für das Wagenmanagementsystem hinsichtlich einer Verteilung eingehender Waren am Wareneingang, seien die Folgenden beispielhaft genannt:
- Unterlagerbereiche werden auf Grundlage von Lagerklassen der eingehenden Ware zugeteilt,
- der Eingang eingehender Ware erfolgt nach den Kriterien "flüssige Gebinde", "trockene Gebinde",
- Fallhöhe aus einem Hochregal,
- Kühlware,

Über das Warenmanagementsystem kann die Einlagerung derart gesteuert werden, dass immer bestimmte Regalreihen, beispielsweise die Regalreihen 1 - 10 angesprochen werden, die Fallhöhe berücksichtigt wird, die Einlagerung von unten nach oben je nach Platzverhältnissen erfolgt oder beispielsweise gleiche Chargen soweit wie möglich zusammen gelagert werden je nach Platzverhältnissen, die Palettenhöhe sowie die Platzverfügbarkeit ebenso durch das Warenmanagementsystem berücksichtigt wird.

Über das Warenmanagementsystem können Stammdaten - sofern noch nicht vorhanden - manuell oder automatisch angelegt werden. Bei diesen Stammdaten kann es sich beispielsweise um eine Artikelnummer, eine Artikelbezeichnung, ein Aggregatzustand, im Falle der Anlieferung auf einer Palette um deren Typ handeln, sowie um die Höhe der Palette. Weitere Kriterien zur Ermittlung der Lagerplätze bei der Einlagerung sind beispielsweise die Anzahl der Gebinde pro Palette, die Verpackungsart, das Nettogewicht, das Bruttogewicht, die Lagerklasse, Kühlpflicht oder die jeweilige Gefahrengutklasse.

Diese Informationen, die am Wareneingang/Pforte bei Wareneingang durch das Warenmanagementsystem generiert werden, werden hinsichtlich des Aufenthaltsortes durch das Warenmanagementsystem überwacht und aktualisiert. Bei Wareneingang werden Barcodes ausgedruckt und eingehende Waren mit dem die Informationen enthaltenen Barcodes versehen. Neben Barcodes können auch andere maschinenlesbare Codes zugelassen werden, so zum Beispiel der EAN-Code 128. Daneben besteht die Möglichkeit, eine Codierung derart vorzunehmen, dass durch eine bestimmte Codierung beim Scannen ein Verweis auf den im Warenmanagementsystem mit der Zahl oder dem Buchstaben verbundenen Daten erfolgt, die nur im Warenmanagementsystem hinterlegt sind und nicht im Code auf der Ware bzw. auf der Palette. Eingelagerte Waren, die sich im Lagerbereich bzw. in Unterlagerbereichen an ihren korrekten Lagerplätzen befinden, haben den Wareneingang bereits durchlaufen und sind mit entsprechenden die Stammdaten enthaltenen Barcodes bzw. Barcodesscannungen versehen, die die relevanten Informationen, insbesondere die Stammdaten enthalten.

Hinsichtlich des Warenausgangs, welcher ebenfalls durch das Warenmanagementsystem koordiniert und elektronisch gesteuert wird, ist beachtlich, dass zur Aktualisierung des Warenmanagementsystems hinsichtlich ausgehender Waren, deren Verlassen des Lagerbereiches zweifelsfrei und eindeutig dokumentiert ist. Wird ein Auftrag eines Kunden erhalten, wird dieser im Warenmanagementsystem erfasst, so dass eine beispielsweise aus mehreren Kommissionen bestehende zusammengehörige Lieferung auf einer Warenausgangsbahn zusammengestellt werden kann. Die Zusammenstellung der einzelnen Lieferung erfolgt manuell und wird durch die Mitarbeiter bestimmt. Auf einer Warenausgangsbahn müssen somit mehrere Kommissionen stehen können. Die auf den Warenausgangsbahnen jeweils vorzukommissionierenden ausgehenden Waren sollten zugänglich sein.

Beispielsweise werden Paletten mit darauf befindlichen in Form von einzelnen Gebinden angeordnete ausgehende Waren per Hochregalstapler aus den Hochregalen entnommen, vor den Hochregalen an einem Fahrweg angeordnet und von elektrisch angetriebenen Niederhubwagen mit Fahrerstand aufgenommen und zu Warenausgangsbahnen im Kommissionierbereich transportiert. Auf der Warenausgangsbahn im Kommissionierbereich wird die ausgehende Ware so angeordnet, dass diese zügig in einen, vor dem Tor der jeweiligen Warenausgangsbahn geparkten LKW zügig verladen werden kann.

Innerhalb des Kommissionierbereiches erfolgt die Information eines Mitarbeiters durch Monitor im Kommissionierbereich in der Halle, beispielsweise durch die Pforte, die dem Mitarbeiter mitteilt, welcher LKW an welchem Tor verladen werden soll. Der die ausgehende Ware abholende Fahrer erhält an der Pforte die zur Verladung nötigen Papiere und begibt sich zum angewiesenen Tor.

Die Verladung ausgehender Ware erfolgt durch die Mitarbeiter, die die auf den Warenausgangsbahnen aufgereihten Waren in den vor dem jeweiligen Tor geparkten LKW verladen.

### Vorteile der Erfindung

Durch die vorliegende Erfindung kann eine effektivere Bewirtschaftung eines Lagerbereiches erzielt werden, da durch die vom Warenmanagementsystem generierten Barcodes eingehende Ware unmittelbar, ohne dass Zwischenschritte erforderlich wären, an die vom Warenmanagementsystem zugewiesenen Lagerplätze befördert und dort eingelagert werden kann. Die Handhabung eingehender und ausgehender Waren erfolgt entkoppelt und unabhängig voneinander, so dass bei Anwendung des erfindungsgemäß vorgeschlagenen Verfahrens eine Entladung von LKW oder Containern möglich ist und gleichzeitig innerhalb des Kommissionierungsbereiches auf den Warenausgangsbahnen abgehende Aufträge mit ausgehenden Waren bereits vorkommissioniert werden können. Die Etikettierung eingehender Waren mit Barcodes über das Warenmanagementsystem/Pforte ermöglicht ein gezieltes Zuführen eingehender Waren auf vom Warenmanagementsystem zugewiesene Plätze; andererseits können bereits eingelagerte Güter, für die ein Auslagerungsauftrag eines Kunden vorliegt, parallel vorkommissioniert werden, so dass über das erfindungsgemäß vorgeschlagene Verfahren sowohl eingehende Waren als auch ausgehende Waren unabhängig voneinander bearbeitet werden können, was eine erhebliche Vereinfachung der Logistik bedeutet und für eine gleichmäßige Auslastung der vorhandenen Ressourcen hinsichtlich Mitarbeiter, Flurförderzeuge und Stapler sorgt.

### Kurze Beschreibung der Zeichnung

Anhand der Zeichnung wird die Erfindung nachstehend eingehender beschrieben.

Es zeigt:
- Figur 1: einen schematisch dargestellten Lagerbereich mit Unterlagerbereichen, Hochregalen, Regalgassen sowie Wareneingang und Warenausgang,
- Figur 2: in schematischer Darstellung eine Palette mit daran aufgenommenen eingehenden bzw. ausgehenden Waren und
- Figur 3: den schematischen Aufbau eines Warenmanagementsystems.

### Ausführungsvarianten

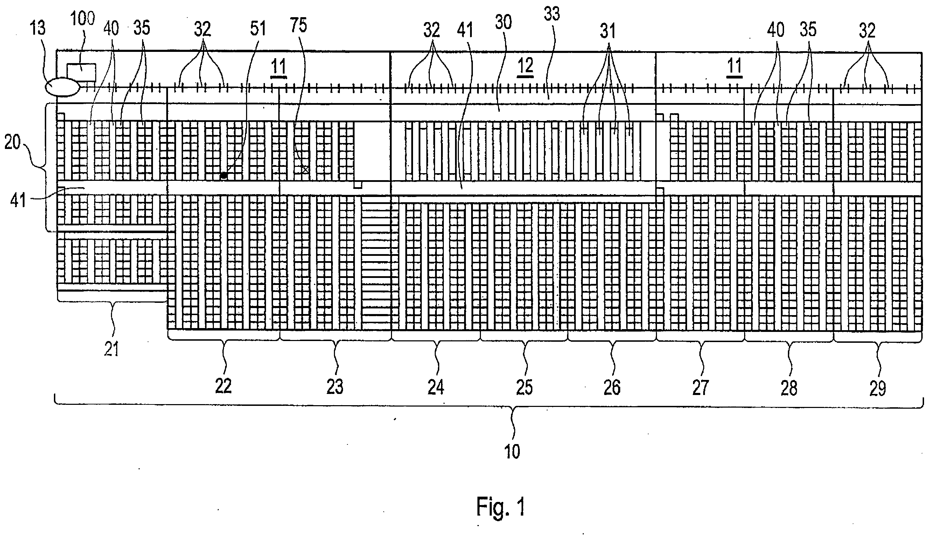

Der Darstellung gemäß Figur 1 ist ein Lagerbereich zu entnehmen, der in einzelne Unterlagerbereiche unterteilt ist, einen Kommissionierbereich sowie einen Wareneingang und einen Warenausgang umfasst.

Der schematischen Darstellung gemäß Figur 1 ist zu entnehmen, dass ein Lagerbereich 10 in einzelne Unterlagerbereiche 20 - 29 unterteilt ist. Entlang einer Längsseite des Lagerbereiches sind zwei Wareneingänge 11, sowie ein Warenausgang 12 und eingangsseitig des Lagerbereiches 10 eine Pforte 13 angeordnet. Des Weiteren umfasst der Lagerbereich 10 gemäß der schematischen Darstellung in Figur 1 einen Kommissionierungsbereich 30 innerhalb dessen sich eine Anzahl nebeneinander verlaufender Warenausgangsbahnen 31 befindet. Die beiden Wareneingänge 11, an denen eingehende Waren angeliefert werden, flankieren den Warenausgang 12 an dem ausgehende Waren den Lagerbereich 10 verlassen.

Figur 1 zeigt des Weiteren, dass ein jeder der Unterlagerbereiche 20 - 29 mit Hochregalen 35 versehen ist. Die Hochregale 35 werden von Regalgassen 40 voneinander getrennt, die von Hochregalstaplern 51 passiert werden können. Während die Regalgassen 40 im Wesentlichen in vertikale Richtung verlaufen, erstrecken sich darüber hinaus breitere Fahrwege 41 durch Unterlagerbereiche 20 - 29, so dass die Hochregale 35 und die in diesen eingelagerten Waren durch Flurförderzeuge 50 oder Hochregalstapler 51 allesamt erreichbar sind. Die Hochregale 35, die sich in den einzelnen Unterlagerbereichen 20 - 29 befinden, erstrecken sich deckenhoch und können eine Höhe von beispielsweise 13 m erreichen, wobei die obersten Lagerplätze in den Hochregalen dann über Hochregalstapler 51 erreichbar sind. Mit Bezugszeichen 70 sind sogenannte Terrassenplätze bezeichnet, an denen Leerpackmittel gelagert werden.

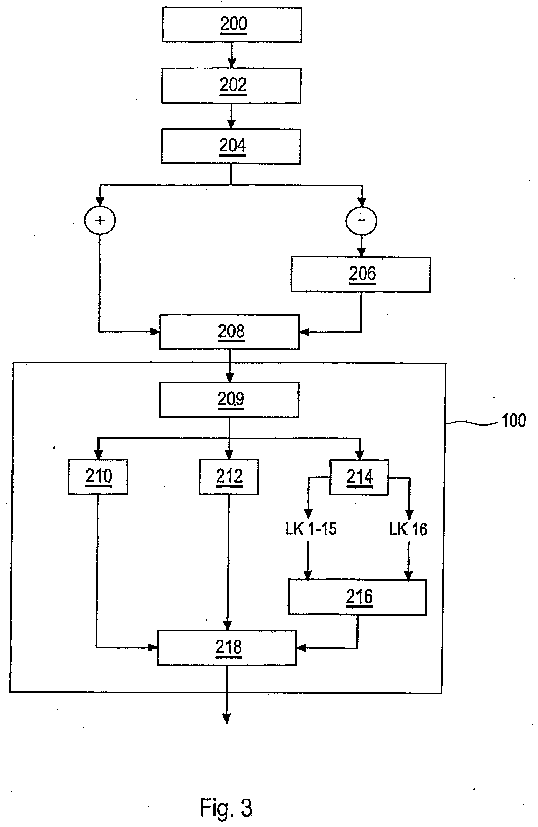

In der Figur 1 der Pforte 13 zugeordnet, wird die Organisation bzw. Bearbeitung und Einlagerung und Kommissionierung eingehender und ausgehender Waren über ein Warenmanagementsystem 100 organisiert. Dessen Funktionsweise sowie die Kriterien, anhand derer eingehende Waren eingelagert werden, wird in Zusammenhang mit Figur 3 näher erläutert.

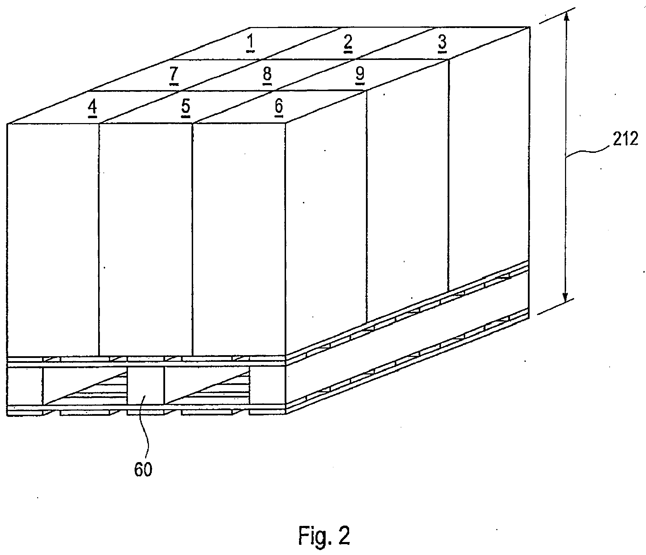

Figur 2 zeigt in schematischer Weise eine Palette 60, auf der sich eingehende oder ausgehende Waren 1 - 9 befinden. Eine Palettenhöhe, welche die Palette 60 sowie die auf dieser gestapelten Waren 1 - 9 einnehmen, ist durch Bezugszeichen 212 bezeichnet, vergleiche auch Darstellung gemäß Figur 3.

Die Palette 60 sowie die auf dieser angeordneten eingehenden bzw. ausgehenden Waren 1 - 9 kann in eine Plastikfolie eingeschweißt sein, ferner können die Gebinde, die auf der Oberseite der Palette 60 gestapelt sind.

Bei den gelagerten Waren handelt es sich vornehmlich um Feststoffe und Flüssigkeiten, von denen der größte Teil nach Gefahrstoffverordnung als umweltgefährlich kennzeichnungspflichtig ist. In allen Unterlagerabschnitten 20 - 29 ist die Lagerung von Stoffen mit den Warengefahrklassen 1, 2 und 3 der Lagerklassen LGK 8b, nicht brennbare ätzende Stoffe und LGK 9a sowie LGK 9b, umweltgefährlich, zulässig. In den Unterlagerabschnitten 24, 25, 26 dürfen zusätzlich Stoffe der Lagerklassen LGK 3, entzündbare flüssige Stoffe, LGK 6.1a brennbare akut giftige Stoffe, LGK 6.1b nichtbrennbare akut giftige Stoffe, LGK 6.1c brennbare giftige oder chronisch wirkende Stoffe sowie LGK 6.1d nichtbrennbare giftige oder chronisch wirkende Stoffe eingelagert werden.

Sind bestimmte Vorschriften der TRGS 510 zur Zusammenlagerung erfüllt, dann dürfen auch Stoffe folgender Lagerklassen eingelagert werden, nämlich LGK 10 brennbare Flüssigkeiten, LGK 11 brennbare Feststoffe, LGK 12 nichtbrennbare Feststoffe, LGK 13 sonstige brennbare und nichtbrennbare Stoffe.

Ausgeschlossen ist die Lagerung explosiver Stoffe, verdichteter, verflüssigter oder unter Druck gelöster Gase, Druckgaspackungen (Aerosolpackungen), sonstige explosionsfähige Stoffe, Stoffe die mit bei Berührung mit Wasser entzündliche Gase bilden, ansteckungsgefährliche Stoffe, sowie insbesondere radioaktive Stoffe.

An der Pforte 13 werden die eingehenden Waren 1 - 9 angemeldet, Lieferscheine und Barcodes 101 erstellt und den eingehenden Waren 1 - 9 zugeordnet bzw. an diesen befestigt. An der Pforte 13 werden die Lieferscheine mittels Wareneingangsbuchung, beispielsweise in einem SAP-Programm in das Warenmanagementsystem 100 eingepflegt, was über eine Übertragung an einer Schnittstelle zwischen dem Warenmanagementsystem 100 und dem System des Kunden erfolgt. Anhand der eingepflegten Daten wird der Entladevorgang, beispielsweise mit einem LKW herantransportierte eingehender Waren 1 - 9 elektronisch koordiniert.

Das Warenmanagementsystem 100 führt die Zuteilung bestimmter Unterlagerbereiche 20 bzw. 29 des Lagerbereiches 10, beispielsweise auf Grundlage der Lagerklassen der eingehenden Waren 1 - 9 durch. Die Einlagerung der eingehenden Waren 1 - 9 erfolgt beispielsweise prioritär mit einer Regalreihe 1 - 10, ferner erfolgt die Einlagerung derart, dass flüssige Stoffe in unteren Bereichen der Hochregale 35 eingelagert werden und trockene Gebinde im oberen Bereich. Ein weiteres Kriterium, weiches durch das Warenmanagementsystem 100 beachtet wird, ist die Fallhöhe, ferner ob es sich um Kühlware handelt, die beispielsweise in einem gekühlten Unterlagerbereich 21 einzulagern ist. Die weiteren Einlagerungskriterien, die durch das Warenmanagementsystem 100 angelegt werden, ist die Einlagerung von unten nach oben, je nach Platzverhältnissen, sowie, dass gleiche Chargen soweit wie möglich zusammen gelagert werden, was jedoch durch die Platzverhältnisse eingeschränkt sein kann. Ferner wird bei der Prüfung der Platzverfügbarkeit die Palettenhöhe 212 einer Palette 60 samt Gebinde als Kriterium berücksichtigt sowie das einzulagernde Material.

Stellt sich heraus, dass eingehende Waren 1 - 9 nicht über Stammdaten im Warenmanagementsystem 100 hinterlegt sind, können diese manuell angelegt werden. Die Kriterien zum Anlegen der Stammdaten für eingehende Waren 1 - 9 sind beispielsweise Artikelnummer, Artikelbezeichnung, Aggregatzustand der eingehenden Waren, der Typ der Palette 60 oder die Palettenhöhe 212, ferner die Anzahl der Gebinde, die pro Palette 60 angeliefert werden. Des Weiteren wird das Nettogewicht sowie das Bruttogewicht berücksichtigt, selbstverständlich die Lagerklasse der eingehenden Waren 1 - 9 und ob es sich um zu kühlende Waren handelt, die in einem besonders gekühlten Bereich der Unterlagerbereiche 20 - 29 des Lagerbereiches 10 einzulagern sind.

An der Pforte 13 werden diese Informationen enthaltende Barcodes 101 ausgegeben, die eingehenden Waren 1 - 9 werden einem der beiden Wareneingänge 11 zugewiesen, bzw. es wird ein Tor 32 zur Entladung zugewiesen. An der Pforte 13 werden die Daten in das Warenmanagementsystem 100 eingegeben, nunmehr werden die eingehenden Waren 1 - 9 an dem jeweils zugewiesenen Tor 32 entladen. Das Warenmanagementsystem 100 hat mit der Erstellung der Barcodes 101 den eingehenden Waren 1 - 9 ihren entsprechenden Lagerplatz 75 innerhalb der Unterlagerbereiche 20 bzw. 29 des Lagerbereiches 10 in einem bestimmten Hochregal 35 zugewiesen.

Die eingehenden Waren 1 - 9 werden am jeweils zugewiesenen Tor 32 entladen. Die Entladung der eingehenden Waren 1 - 9 erfolgt in der Regel durch den Fahrer des die eingehenden Waren 1 - 9 anliefernden Fahrzeugs. Von dort werden sie von Hochregalstaplern 51 aufgenommen und an den zugewiesenen Lagerplatz 75 eingelagert. Bevor der Hochregalstapler 51 die eingegangenen Waren 1 - 9 aufnimmt, werden diese mit den an der Pforte 13 erstellten Barcodes 101 versehen. Die Einlagerungszeit der eingehenden Waren 1 - 9 liegt zwischen einigen Tagen und kann bis zu mehrere Monate betragen.

Anhand von Figur 3 sei nachfolgend das Warenmanagementsystem 100 näher erläutert.

Nachdem eine Anmeldung 200 an der Pforte 13 stattgefunden hat, werden die eingehenden Waren 1 - 9 begleitende Papiere innerhalb einer Prüfroutine 202 abgeprüft, ferner wird ein Abgleich mit einer Stammdatenkartei, d.h. einem Artikelstamm durchgeführt. Sollten Stammdaten fehlen, kann ein manuelles Nachtragen im Rahmen einer Stammdatenerstellung 206 auch manuell durchgeführt werden. An die Stammdatenerstellung schließt sich eine Eingaberoutine 208 an.

Das Warenmanagementsystem 100 führt eine Prüfroutine 209 durch, da es anhand der Stammdaten erkennt, um welche eingehenden Waren 1 - 9 es sich handelt, da diese hinsichtlich ihrer Lagerklasse und Warengefahrenklasse bekannt sind und diese Stammdaten einer Lagerplatzzuweisung zugrunde gelegt werden können. Die Informationen werden in Form eines Barcodes oder einer Barcodekennung auf den eingehenden Waren 1 - 9 bzw. den Paletten 60 angebracht.

Im Rahmen der vom Warenmanagementsystem 100 durchgeführten Prüfung, wird eine Auswahlroutine 218 durchlaufen, in der die Lagerplatzauswahl in den Unterlagerbereichen 20 - 29 vorgenommen wird. Die Platzauswahl eines Lagerplatzes 75 erfolgt nach den weiter oben stehenden Kriterien.

Da die Mitarbeiter in den beiden Wareneingängen 11, Warenausgang 12 sowie den Lagerbereichen 20 - 29 des Öfteren Scanvorgänge vornehmen müssen, anhand derer das Warenmanagementsystem 100 aktualisiert wird, sind die Mitarbeiter mit Scannern ausgestattet. Tore und Versandbahnen haben keine Barcodes. Es sei hervorgehoben, dass durch das Warenmanagementsystem 100 sowie die mit einzelnen mobilen Scannern ausgerüsteten Mitarbeiter eine permanente Inventur durchgeführt werden kann. Dies bedeutet eine erhebliche Ressourceeinsparung und einen Zeitvorteil dadurch, dass das geforderte Kriterium, in einem Lagerbereich 10 pro Jahr die dort vorgehaltenen Stellplätze jeweils einmal zu kontrollieren und zu erfassen, während des Warenumschlags dort automatisch erfolgt. Es stellt sich demnach keine Verdichtung von Inventurarbeiten am Jahresende ein, denn im Wege der permanenten Inventur kann das geforderte Inventurkriterium im laufenden Betrieb erfüllt werden, so dass erhebliche Ressourcen und Zeit eingespart werden können und besonders am Jahresende kein gesonderter Aufwand zu betreiben ist. Somit können externe Mitarbeiter eingespart werden; ferner entfallen die für die Entlohnung dieser lediglich mit Inventurarbeiten befassten Mitarbeiter.

Ergeht im Rahmen des Warenausgangs ein Auftrag eines Kunden, so wird der Auftrag im Managementsystem 110 erfasst. Ziel ist es, eine zusammengehörige Lieferung, die auch aus mehreren Kommission bestehen kann, möglichst auf einer Warenausgangsbahn 31 vorzukommissionieren.

Die Kommissionierer, welche im Kommissionsbereich 30 die ausgehenden Waren 1 - 9 vorkommissionieren, tragen Paletten 60 mit ausgehenden Waren 1 - 9 befördern diese aus den Hochregalen 35 und bringen diese, da die Palette 60 zuvor gescannt wurde, zum Auftrag zugehörigen Warenausgangsbahn 31.

Im Verladebereich 33, der Teil des Kommissionierbereiches 30 ist, werden die Kommissionierer durch die Pforte 13 dahingehend informiert, welcher LKW an welchem Tor 32 verladen werden muss. Der Kommissionierer / Verlader erhält von der Pforte 13 die zur Verladung erforderlichen Papiere und begibt sich zu dem Auftrag zugewiesenen Tor 32.

Die Voraussetzung für die Erstellung und Funktionsweise des Warenmanagementsystems 100 ist, dass der Artikelstamm komplett vorhanden ist. Jeder Lagerplatz 75 ist einer konkreten Lagerklasse bzw. mehreren konkreten Lagerklassen zugeordnet. Dadurch ist sichergestellt, dass den betreffenden Lagerplätzen 75 nur bestimmte eingehende Waren 1 - 9 zugewiesen werden können. Im Warenmanagementsystem 100 muss für alle Lagerplätze 75 für einzulagernde Waren 1 - 9 eine definierte Fachhöhe der Lagerplätze 75 hinterlegt sein bzw. ein festgelegter Palettentyp für diese Lagerplätze 75 vorgegeben werden.

Zur Zusammenstellung und zur Erleichterung der Vorkommissionierung ist eine Ladeliste verfügbar.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 1 - 9: eingehende/ausgehende Waren
- 10: Lagerbereich
- 11: Wareneingang
- 12: Warenausgang
- 13: Pforte
- 15: Stammdaten (von Warenmanagementsystem 100 generiert)

- 20 - 29: Unterlagerbereiche
- 30: Kommissionierbereich
- 31: Warenausgangsbahn
- 32: Tor
- 33: Verladebereich
- 35: Hochregal

- 40: Gassen
- 41: Fahrweg

- 50: Niederhubwagen
- 51: Hochregalstapler

- 60: Palette

- 70: Terrassenplatz
- 75: vom Warenmanagementsystem 100 zugewiesener Lagerplatz
- 76: Lagerplatz ausgehender Waren 1 - 9

- 100: Warenmanagementsystem
- 101: Barcode
- 102: Barcodekennung
- 103: Scanner

- 200: Anmeldung
- 202: Prüfroutine
- 204: Standardkartei
- 206: Stammdatenerstellung
- 208: Eingaberoutine
- 209: Prüfroutine
- 210: Palettentyp
- 212: Palettenhöhe
- 214: Lagerklasse
- 216: Bestimmung der Lagerklasse
- 218: Auswahlroutine

## Patentansprüche

1. Verfahren zur Disposition eingehender und ausgehender Waren (1 - 9) in einem Lagerbereich (10), der in mehrere Unterlagerbereiche (20 - 29) unterteilt ist mit Hochregalen (35), die voneinander durch Gassen (40) für Hochregalstapler (51) getrennt sind, mit nachfolgenden Verfahrensschritten:
a) eingehende Waren (1 - 9) werden beim Wareneingang (11) gescannt, wodurch ein Warenmanagementsystem (100) der eingehenden Ware (1 - 9) einen Lagerplatz (75) zuweist,
b) die eingegangenen Waren (1 - 9) werden mit mindestens einem vom Warenmanagementsystem (100) generierten Barcode (101) versehen,
c) die eingehenden Waren (1 - 9) werden auf dem zugewiesenen Lagerplatz (75) eingelagert,
d) unabhängig entkoppelt vom Wareneingang (11, 12) werden ausgehende Waren (1 - 9) in einem Kommissionierbereich (30) zusammengstellt und
e) die ausgehenden Waren (1 - 9) werden in einer jeweils einem Tor (32) zugeordneten Warenausgangsbahn (31) vorkommissioniert und verladefertig aufgestellt.

2. Verfahren gemäß Anspruch 1, **dadurch gekennzeichnet, dass** das Wargenmanagementsystem (100) den Wareneingang (11) eingehender Waren (1 - 9) anhand einer folgender Kriterien steuert:
- Unterlagerbereiche (20 - 29) werden auf Grundlage der Lagerklasse der eingehenden Ware (1 - 9) zugeteilt,
- die Einlagerung eingehender Ware (1 - 9) erfolgt nach den Kriterien "flüssige Gebinde unten", "trockene Gebinde oben",
- Fallhöhe aus dem Hochregal (35),
- Kühlware,

3. Verfahren gemäß Anspruch 1, **dadurch gekennzeichnet, dass** das Warenmanagementsystem (100) am Wareneingang (11)/Pforte (13) Barcodes (101) oder Barcodekennungen (102) generiert, mit denen die eingehende Ware (1 - 9) versehen wird, wobei die Barcodes (101, 102) Stammdaten, die eine Identifizierung der Ware durch das Warenmanagementsystem ermöglichen, enthalten.

4. Verfahren gemäß Anspruch 1, **dadurch gekennzeichnet, dass** im Kommissionierbereich (30) vor dem Warenausgang (12) eine Anzahl von Warenausgangsbahnen (31) vorgesehen ist, auf denen ausgehende Waren (1 - 9) vorkommissioniert werden.

5. Verfahren gemäß Anspruch 1, **dadurch gekennzeichnet, dass** ausgehende Waren (1 - 9) auf Palletten (60) angeordnet sind, deren Barcodes (101) eine Kennung für eine zugewiesene Warenausgangsbahn (31) im Kommissionierbereich (30) enthalten.

6. Verfahren gemäß Anspruch 1, **dadurch gekennzeichnet, dass** Wareneingänge (11, 12) und ein Warenausgang (13) unabhängig und entkoppelt voneinander abgewickelt werden.

7. Verfahren gemäß Anspruch 1, **dadurch gekennzeichnet, dass** eingehende Waren (1 - 9) nach deren Entladung unmittelbar an vom Warenmanagementsystem (100) zugewiesene Lagerplätze (75) eingelagert werden.

8. Verfahren gemäß Anspruch 1, **dadurch gekennzeichnet, dass** ausgehende Waren (1 - 9) gemäß Verfahrensschritt d) mittels Hochregalstaplern (51) aus den zugewiesenen Lagerplätzen (75) und an einem Fahrweg (41) der die Unterlagerbereiche (20 - 29) verbindet, abgestellt werden.

9. Verfahren gemäß Anspruch 8, **dadurch gekennzeichnet, dass** die entlang des Fahrweges (41) vor den Hochregalen (35) abgestellten, ausgehenden Waren (1 - 9) über elektrisch angetriebene Niederhubwagen mit Fahrerstand (50) dem Kommissionierbereich (30) zugeführt werden.
